# EUROPÄISCHE PATENTANMELDUNG

(11) **EP 0 661 173 A1**
(43) Veröffentlichungstag der Anmeldung: **05.07.1995**
(21) Anmeldenummer: 94112977.7
(22) Anmeldetag: 19.08.1994
(51) Int. Cl.: B42D 15/10, G06K 19/077

(54) **IC-Karte mit integriertem Baustein**

(30) Priorität: 24.08.1993 DE 4328469
(71) Anmelder: Giesecke & Devrient GmbH, D-81677 München (DE)
(72) Erfinder: Haghiri-Tehrani, Yahya, D-80797 München (DE); Dax, Gustav, D-83043 Bad Aibling (DE); Endres, Günter, D-94034 Passau (DE)
(74) Vertreter: Klunker . Schmitt-Nilson . Hirsch

(57) **Zusammenfassung**

Die Erfindung betrifft Ausweiskarten mit einer opaken Kernschicht (10) und mindestens einer transparenten Deckschicht (6) und mit einer Aussparung (14) zur Aufnahme eines elektronischen Moduls (4). Ein Teil der Aussparung reicht bis an die transparente Deckschicht (6) heran bzw. in diese hinein. Dieser Teil der Aussparung wird optisch aufgewertet, um das Erscheinungsbild der Karte zu verbessern. Dies kann beispielsweise durch Bedrucken der Aussparung (14) oder durch Einbringung eines zusätzlichen Elements in die Aussparung (14) geschehen, das auch als Echtheitsmerkmal für die Karte dienen kann.

## Beschreibung

Die Erfindung betrifft Ausweiskarten mit einer opaken Kernschicht, mit wenigstens einer transparenten Deckschicht und mit einer Aussparung zur Aufnahme eines elektronischen Moduls mit einem integrierten Schaltkreis, wobei die Aussparung bis an die transparente rückseitige Schicht heran- oder in diese hineinragt. Ferner betrifft die Erfindung ein Verfahren zur Herstellung solcher Ausweiskarten.

Ausweiskarten mit einem elektronischen Modul, das einen integrierten Schaltkreis enthält, sind seit langer Zeit bekannt und werden für die verschiedensten Anwendungen bereitgestellt. Die äußeren Abmaße solcher Ausweiskarten sind für alle Anwendungen der Karte gleich und in einer Norm festgelegt. Ein großer Teil der Ausweiskarten wird heute in sogenannter Montagetechnik gefertigt, d. h. es wird ein fertiger Kartenkörper mit einer Aussparung bereitgestellt, in die das elektronische Modul eingesetzt wird. Die Tiefe der Aussparung bestimmt sich aus der Dicke des einzusetzenden Moduls und der Forderung, daß die in der Norm festgelegte Maximaldicke der Karte im Modulbereich nicht überschritten werden darf. Da je nach Bauart das Modul eine Dicke aufweist, die im allgemeinen deutlich größer als die Hälfte der Maximaldicke der Karte ist, ist der Boden der Aussparung im Kartenkörper relativ dünn.

Bei Ausweiskarten, die weitestgehend aus einer opaken Kernschicht und sehr dünnen vorder- und rückseitigen transparenten Deckschichten aufgebaut sind, liegt der Boden der Aussparung dennoch in der opaken Kernschicht, so daß die Aussparung und das in ihr befindliche Modul durch den Boden der Aussparung nicht zu sehen sind.

Es gibt jedoch Ausweiskarten mit dickeren vorder- und rückseitigen transparenten Deckschichten, deren Kernschicht entsprechend dünner ausgebildet ist. Solche Kartenaufbauten werden beispielsweise dann verwendet, wenn sicherheitsrelevante Daten mit Hilfe eines Lasers in das Volumen einer der transparenten Deckschichten der Karte eingeschrieben werden. Diese Form der Beschriftung von Ausweiskarten ist besonders fälschungssicher, da die in das Volumen einer dickeren Schicht eingeschriebenen Daten nicht so einfach, z. B. durch "Abkratzen", entfernt und verändert werden können, ohne die Karte augenfällig zu beschädigen. Die Dicke der transparenten Schicht, in die die Daten eingeschrieben werden, ist also in einem gewissen Rahmen vorgegeben. Ferner werden im allgemeinen aus Symmetriegründen beide Deckschichten gleich dick gewählt, so daß für die opake, im allgemeinen weiß eingefärbte Kernschicht eine Dicke zwischen etwa 30 % und 70 % der Kartendicke zur Verfügung steht.

Bei Ausweiskarten des obengenannten Typs wird zum Einbau des elektronischen Moduls in den Kartenkörper häufig die sogenannte Montagetechnik verwendet, d. h. es wird zunächst ein fertiggestellter Kartenkörper bereitgestellt, in dem nachträglich die Aussparung zur Aufnahme des elektronischen Moduls, z. B. durch Fräsen, erstellt wird.

Bei derartig hergestellten Karten mit dickeren transparenten Deckschichten ragt die Aussparung für die Aufnahme des elektronischen Moduls bis an die rückseitige transparente Deckschicht heran bzw. in diese hinein, so daß durch den nunmehr transparenten Boden der Aussparung die Kontur der Aussparung und das in ihr befindliche Modul zu sehen ist. Das optische Erscheinungsbild solcher Karten ist folglich beeinträchtigt. Darüber hinaus stört der sichtbare Teil der Aussparung auch deswegen, weil die Rückseite der Karte auch zur Unterbringung eines Magnetstreifens und eines Unterschriftsstreifens und zur drucktechnischen Gestaltung genutzt wird.

Es ist deshalb Aufgabe der Erfindung, bei Ausweiskarten des obigen Typs das optische Erscheinungsbild der Karte zu verbessern.

Die Aufgabe wird durch die Merkmale der nebenangeordneten Ansprüche 1, 8 und 13 gelöst.

Der Grundgedanke der Erfindung besteht darin, innerhalb des Kartenkörpers Maßnahmen zu ergreifen, durch die der Bereich des Kartenkörpers, der den in die rückseitige Deckschicht ragenden Teil der Aussparung enthält, optisch aufgewertet wird. Dieses Ziel kann dadurch erreicht werden, daß man die Maßnahmen entweder direkt in der Aussparung oder im Schichtaufbau des Kartenkörpers vornimmt. Eine erste Möglichkeit besteht darin, den Teil der Aussparung, der bis an die transparente rückseitige Schicht heran- bzw. in diese hineinragt optisch an die opake Kernschicht des Kartenkörpers anzupassen, so daß die Aussparung und das in ihr befindliche Modul kaum noch zu sehen sind. Die optische Anpassung der Aussparung kann entweder durch Maßnahmen, die man an der Aussparung im Kartenkörper vor dem Einsetzen des Moduls in den Kartenkörper oder aber durch Maßnahmen, die man an dem elektronischen Modul selbst vornimmt, erreicht werden.

Eine andere Möglichkeit, den Teil der Aussparung, der bis an die transparente rückseitige Schicht heran- bzw. in diese hereinragt, optisch aufzuwerten, besteht darin, daß man diesen Teil der Aussparung mit einem optisch ansprechenden Element versieht, das sich von der opaken Kernschicht der Karte abhebt. Dabei ist es besonders vorteilhaft, wenn man ein schwierig herzustellendes Element in die Aussparung einsetzt. Ein solches Element kann als zusätzliches Echtheitsmerkmal verwendet werden, das es dem Kartenbenutzer erlaubt, die Echtheit der Karte visuell zu überprüfen.

Schließlich kann der rückseitige transparente Teil des Kartenkörpers durch zwei Schichten derart gebildet werden, daß derjenige Teil der Aussparung, der in den rückseitigen transparenten Teil ragt, in der transparenten Schicht liegt, die sich zwischen der Kernschicht und der rückseitigen Deckschicht befindet. In diesem Fall kann zwischen den beiden transparenten Schichten ein Element vorgesehen werden, das den obengenannten Bereich der Aussparung abdeckt, so daß dieser bei rückwärtiger Betrachtung der Karte kaum bzw. nicht mehr sichtbar ist.

Gemäß einem ersten Ausführungsbeispiel der Erfindung wird die Kontur der Aussparung mit einem Material bedruckt, das in seiner Farbgebung möglichst gut an die opake Kernschicht der Ausweiskarte angepaßt ist.

Dies kann beispielsweise im Tampondruckverfahren oder im Transferdruckverfahren geschehen. Als Material zum Bedrucken der Kontur der Aussparung kann ein flüssiger Thermokleber gewählt werden, mit dessen Hilfe das elektronische Modul später im Kartenkörper verklebt wird. In diesem Fall ist es besonders vorteilhaft, wenn die gesamte Kontur der Aussparung bedruckt wird, um eine möglichst große Klebewirkung zu erzielen. Alternativ kann aber auch nur diejenige Kontur der Aussparung, die in die rückseitige, transparente Deckschicht heranragt bzw. in diese hineinragt, mit einer Farbe bedruckt werden, die weitestgehend mit der Farbe der opaken Kernschicht übereinstimmt.

Gemäß einem weiteren Ausführungsbeispiel der Erfindung kann die Aussparung mit einem in der Farbe der opaken Kernschicht angepaßten Gießharz angefüllt werden. Danach wird ein elektronisches Modul mit einem integrierten Schaltkreis und Leiterbahnen, die den integrierten Schaltkreis mit auf dem Modul liegenden Kontaktflächen verbinden, in die Aussparung eingesetzt. Das Gießharz ist so zu dosieren, daß hierbei der Schaltkreis und die Leiterbahnen zum Schutz vor mechanischen Belastungen von ihm umgeben werden und bei der fertiggestellten Ausweiskarte zumindest der in der rückseitigen transparenten Deckschicht liegende Teil der Aussparung vollständig mit Gießharz gefüllt ist. Um die Dosierung des Gießharzes zu erleichtern, können in der opaken Kernschicht Ausgleichshohlräume geschaffen werden, die mit der Aussparung in Verbindung stehen und in die gegebenenfalls überschüssiges Gießharz abfließen kann.

Anstelle des Gießharzes kann auch ein farblich angepaßter Flüssigkleber oder Heißsiegelkleber in die Aussparung eingesetzt werden, über den das elektronische Modul, das eventuell mit einem Gießharz versehen ist, mit dem Kartenkörper verbunden wird.

Gemäß einem weiteren Ausführungsbeispiel der Erfindung kann bereits vor dem Laminieren der einzelnen Kartenschichten in die rückseitige transparente Deckschicht der in ihr vorgesehene Teil der Aussparung eingebracht werden. Beim Laminieren der Kartenschichten erweichen diese etwas, so daß Material aus der Kernschicht in die Aussparung der rückseitigen Deckschicht fließt. Bringt man nun in den Kartenkörper, z. B. durch Fräsen, die Aussparung für das Modul ein, so ist der Teil der Aussparung, der sich in der rückseitigen transparenten Deckschicht befindet, mit einer dünnen opaken Schicht versehen.

Die obigen Ausführungsbeispiele zeigen alle, wie es möglich ist, denjenigen Teil der Aussparung, der bis an die transparente rückseitige Schicht heran bzw. in diese hineinragt optisch an die opake Kernschicht der Karte anzupassen. Im folgenden sind Ausführungsbeispiele aufgeführt, die das Einbringen eines optisch ansprechenden Elements in die Aussparung betreffen.

Gemäß einem ersten Ausführungsbeispiels dieser Art wird in die Aussparung des Kartenkörpers eine Schicht eingebracht, die auf derjenigen Seite, die bei rückseitiger Betrachtung der fertiggestellten Ausweiskarte zu sehen ist, mit Informationen, z. B. In Form eines Firmenlogos, versehen sein kann. Diese Informationen können entweder auf die Schicht aufgedruckt oder in diese eingeprägt werden.

Gemäß einem weiteren Ausführungsbeispiels wird in die Aussparung des Kartenkörpers ein Hologramm eingebracht, das bei rückseitiger Betrachtung der fertiggestellten Ausweiskarten zu sehen ist.

Sowohl die Schicht als auch das Hologramm werten die Ausweiskarte nicht nur optisch auf, sondern dienen zusätzlich als Echtheitsmerkmal der Karte. Insbesondere Hologramme sind schwierig herzustellen und für einen Fälscher nur mit einem großen Aufwand, der den Nutzen oft übersteigt, nachzuahmen. Andererseits ist das in der Aussparung liegende Hologramm sehr gut geschützt, da es bei der fertigen Ausweiskarte in den Schichtenverbund integriert ist und somit aus einer echten Karte nur entfernt werden kann, wenn man entweder den Boden der Aussparung zerstört oder aber das elektronische Modul aus der Aussparung entfernt. In beiden Fällen wird mit großer Wahrscheinlichkeit das Hologramm beschädigt. Somit hat der Fälscher kaum eine Möglichkeit, ein echtes unbeschädigtes Hologramm zu erhalten und eine Karte total zu fälschen. Darüber hinaus bietet die über dem Hologramm liegende transparente rückseitige Schicht einen guten Schutz vor Beschädigung des Hologramms.

Weitere Eigenschaften und Vorteile der Erfindung ergeben sich aus den Unteransprüchen und der nachfolgenden Beschreibung verschiedener Ausführungsbeispiele, die anhand der Zeichnung näher erläutert sind, darin zeigt:
- Fig. 1: eine Ausweiskarte mit einem elektronischen Modul in der Draufsicht,
- Fig. 2: eine mehrschichtigen Kartenkörper mit Aussparung im Querschnitt,
- Fig. 3: den Kartenkörper aus Fig. 2 mit teilweise bedruckter Aussparung im Querschnitt,
- Fig. 4: einen Kartenkörper mit Teilen der Aussparung im Querschnitt,
- Fig. 5: den Kartenkörper aus Fig. 4 mit eingefräster Aussparung im Querschnitt,
- Fig. 6: die Rückseite einer Ausweiskarte in Draufsicht,
- Fig. 7: einen Kartenkörper mit zweigeteilter rückseitiger transparenter Deckschicht im Querschnitt.

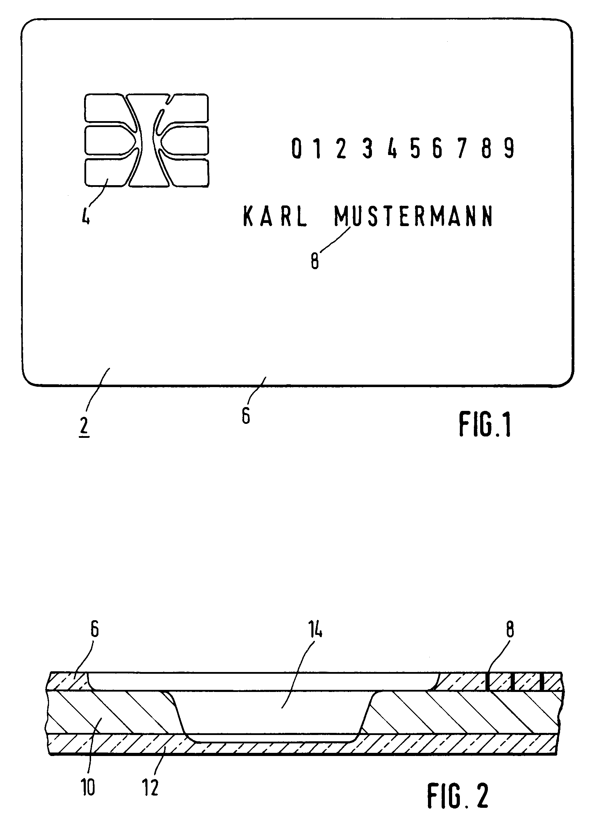

Fig. 1 zeigt eine Ausweiskarte mit elektronischem Modul 4 in Draufsicht. Die vorderseitige Deckschicht 6 ist transparent ausgebildet. In die Deckschicht 6 sind alphanumerische Daten 8 eingeschrieben, wie z. B. der Name des Karteninhabers und seine Kontonummer. Diese Daten werden unter anderem für die Anwendung der Karte benötigt und sind vor Verfälschung möglichst gut zu schützen. Um einen solchen Schutz zu ermöglichen, können die Daten 8 z. B. mittels eines Lasers derart in die transparente Deckschicht eingeschrieben werden, daß sie das gesamte Volumen der Schicht durchdringen.

Fig. 2 zeigt einen mehrschichtigen Kartenkörper mit Aussparung im Querschnitt. Der Kartenkörper ist aus der vorderseitigen transparenten Deckschicht 6, der opaken Kernschicht 10 und der rückseitigen transparenten Deckschicht 12 aufgebaut. In das Volumen der Deckschicht 6 sind die alphanumerischen Daten 8 eingeschrieben. Die Deckschicht 6 weist eine genügend große Dicke auf, die das Abtragen dieser Schicht im Bereich der alphanumerischen Daten 8 und gegebenenfalls ein Nachtragen neuer Daten augenfällig macht und somit das Fälschen der Daten erschwert. Um diesen Effekt herbeizuführen, wird die Deckschicht 6 in einer Dicke von ca. 100 µm aufwärts ausgebildet, bevorzugt verwendete Schichten weisen eine Dicke von ca. 200 µm auf. Die rückseitige transparente Deckschicht 12 wird aus Symmetriegründen gleich dick ausgebildet. Die Dicke der opaken Schicht 10 bestimmt sich aus der in einer Norm festgelegten Gesamtdicke der Karte von ca. 800 µm und beträgt bei 200 µm starken Deckschichten 8 bzw. 10 also ca. 400 µm. In einem derart aufgebauten Kartenkörper wird eine Aussparung 14 zur Aufnahme eines elektronischen Moduls eingebracht, dessen Bauhöhe je nach Bauart ca. 500 bis 700 µm beträgt. Hierbei wird die Tiefe der Aussparung so gewählt, daß eventuelle Toleranzen in der Bauhöhe des Moduls aufgefangen werden können, sie beträgt also ca. 600 bis 725 µm.

Je nach Dicke der verwendeten Deckschicht 6 bzw. 12 ragt die Aussparung 14 somit bis an die rückseitige transparente Deckschicht 12 heran bzw. zum Teil in diese hinein, wie es in Fig. 2 zu sehen ist. Bei der fertiggestellten Karte ist deshalb, wenn man die Rückseite der Karte betrachtet, das elektronische Modul in der Aussparung und ihre Kontur zu sehen, was das optische Erscheinungsbild der Ausweiskarte beeinträchtigt.

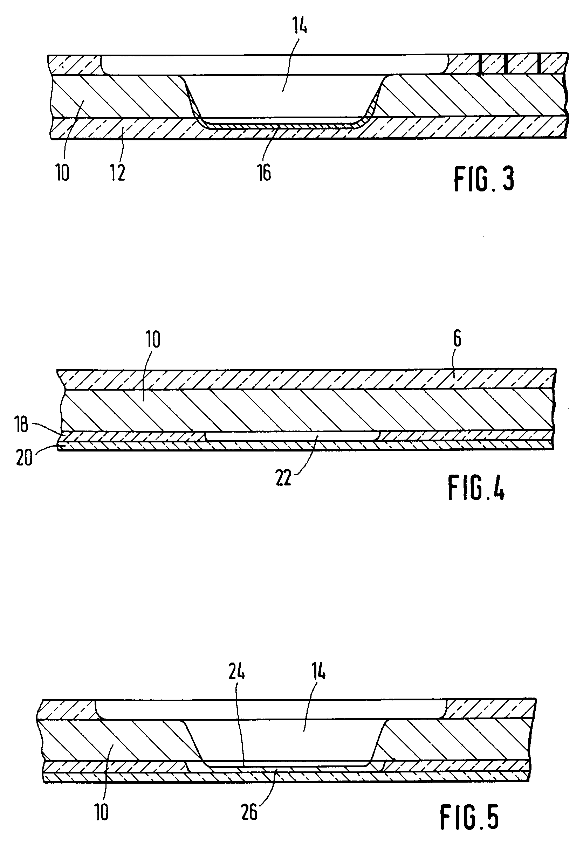

Fig. 3 zeigt weitestgehend den Kartenkörper mit Aussparung aus Fig. 2 im Querschnitt. Im Unterschied zu Fig. 2 ist derjenige Teil der Aussparung, der in der rückseitigen transparenten Deckschicht liegt, mit einer Schicht 16 versehen, die dem optischen Erscheinungsbild der opaken Kernschicht 10 angepaßt ist. Die Schicht kann, wie oben bereits erwähnt, auf verschiedene Art und Weise in die Aussparung 14 eingebracht werden. Es ist z. B. möglich, die Schicht im Tampondruck- bzw. im Transferdruckverfahren zu erzeugen. Entsprechende Techniken sind dem Fachmann bekannt und brauchen hier nicht näher erläutert zu werden. Da die Schicht 16 optisch an die opake Kernschicht 10 angepaßt ist, ist bei der fertiggestellten Ausweiskarte das elektronische Modul von der Rückseite der Karte nicht mehr und die Kontur der Aussparung 14 nur noch schwierig zu sehen.

Natürlich ist es auch möglich, die gesamte Kontur der Aussparung 14 mit der Schicht 16 zu versehen. In diesem Fall kann die Schicht 16 als thermisch aktivierbarer Kleber ausgebildet sein, mittels dessen das elektronische Modul mit dem Kartenkörper verbunden wird.

Fig. 4 zeigt wiederum einen Kartenkörper im Querschnitt, der Aufbau des Kartenkörpers unterscheidet sich von den bisher gezeigten Aufbauten jedoch dadurch, daß die rückseitige transparente Deckschicht 12 aus zwei transparenten Schichten 18 und 20 besteht. Die transparente Schicht 18 wird vor dem Laminieren mit einem Fenster 22 versehen, das in seiner Größe und in seiner Form in etwa demjenigen Teil der Aussparung 14 in Fig. 2 entspricht, der in der rückseitigen transparenten Deckschicht 12 liegt. Die Schichten 6, 10, 18 und 20 werden danach wie in Fig. 4 gezeigt aufeinandergelegt und laminiert, d. h. unter der Einwirkung von Wärme und Druck miteinander verbunden. Dabei erweichen die Schichten und das Fenster 22 in der Schicht 18 wird während des Laminierens mit Material aus der opaken Kernschicht 10 ausgefüllt. In der Oberfläche der Schicht 6 bildet sich beim Laminieren eine Senke entsprechend dem Fenster 22 in der Schicht 18, was jedoch ohne Bedeutung ist, da dieser Bereich des Kartenkörpers beim Bilden der Aussparung 14 entfernt wird.

Fig. 5 zeigt den Kartenkörper aus Fig. 4 mit der Aussparung 14, die beispielsweise durch Fräsen erzeugt werden kann. Der Bereich 26 unterhalb des Bodenbereichs 24 der Aussparung 14 liegt zwar in der transparenten Rückseite der Karte, besteht aber dennoch aus dem Mate- rial der opaken Kernschicht 10, da das in der Fig. 4 gezeigte Fenster beim Laminieren mit diesem Material gefüllt wurde und beim Erstellen der Aussparung 14 in dieses Material hineingefräst wird.

Der Bereich 26 unterhalb des Bodenbereichs 24 kann sehr dünn ausgebildet sein, da beim Fräsen Genauigkeiten von einigen µm zu erzielen sind. Setzt man in die Aussparung des in Fig. 5 gezeigten Kartenkörpers ein elektronisches Modul ein, so ist weder die Kontur der Aussparung 14 von der Rückseite der Karte auszumachen noch das Modul selbst in der Aussparung zu sehen.

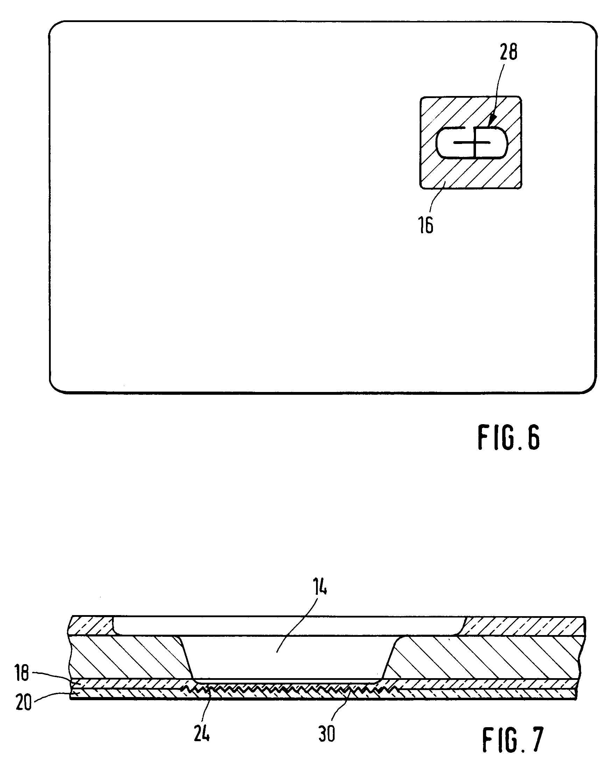

Fig. 6 zeigt die Rückseite einer Ausweiskarte in Draufsicht. Der Querschnitt des Kartenkörpers entspricht weitestgehend dem in der Fig. 3 gezeigten. Die Schicht 16, die zumindest den Teil der Aussparung bedeckt, der an die transparente rückseitige Deckschicht 12 heran bzw. in diese hineinragt, ist in dem in der Fig. 6 gezeigten Beispiel als metallische Schicht ausgebildet und hebt sich deutlich von der opaken Kernschicht der Karte ab, die man bei der rückwärtigen Betrachtung der Karte durch die transparente rückseitige Schicht sieht. Natürlich kann die Schicht 16 auch beliebig anders ausgestaltet werden, um diese Wirkung zu erzielen. Die metallische Schicht 16 enthält Informationen, z. B. in Form eines Firmenlogos 28, das entweder auf die metallische Schicht 16 aufgedruckt oder in diese Schicht eingeprägt wird. Wie der Fig. 3 zu entnehmen ist, ist die metallische Schicht in dem Kartenaufbau integriert und durch die transparente rückseitige Schicht 12 bei der fertiggestellten Karte geschützt. Es ist auch möglich, in die metallische Schicht eine holografische Struktur einzuprägen und das so entstandene Hologramm in die Aussparung des Kartenkörpers einzubringen.

Fig 7 zeigt wiederum einen Kartenkörper mit Aussparung im Querschnitt, dessen rückseitige transparente Deckschicht sich aus zwei transparenten Schichten 18 und 20 zusammensetzt. Die Schicht 18 wird in ihrer Dicke so gewählt, daß der Bodenbereich 24 der Aussparung 14 in dieser Schicht liegt. Zwischen den beiden Schichten 18 und 20 wird bereits bei der Herstellung des Kartenkörpers bereichsweise eine zusätzliche Schicht 30 derart eingebracht, daß bei der fertiggestellten Ausweiskarte der in der Schicht 18 liegende Teil der Aussparung 14 komplett abgedeckt wird. In diesem Fall ist das elektronische Modul in der Aussparung und die Kontur der Aussparung von der Rückseite der fertigen Karte nicht mehr zu sehen. Die zusätzliche Schicht 30 kann entweder als Druckschicht, Farbschicht oder Hologramm etc. ausgebildet sein.

Ausweiskarten, die für bestimmte Anwendungen, z. B. Bankanwendungen bereitgestellt werden, weisen in der Oberfläche der rückseitigen transparenten Deckschicht häufig einen Unterschriftsstreifen oder ähnliche Elemente auf, die den von der Rückseite der Karte aus zu sehenden Teil der Aussparung bereits zum Teil abdecken. In diesem Fall ist es möglich, mit der zusätzlichen Schicht 30 nur noch den verbleibenden Bereich des in der Schicht 18 liegenden Teils der Ausparung 14 abzudecken, der ansonsten frei bliebe und somit sichtbar wäre.

## Patentansprüche

1. Ausweiskarte mit einer opaken Kernschicht, mit wenigstens einer transparenten Deckschicht und mit einer Aussparung zur Aufnahme eines elektronischen Moduls mit einem integrierten Schaltkreis, wobei die Aussparung bis an die transparente Schicht heran- oder in diese hineinragt, dadurch **gekennzeichnet,** daß zumindest der Teil der Aussparung, der an die transparente rückseitige Schicht heran- oder in diese hineinragt, an die Farbe des die Aussparung umgebenden opaken Materials angepaßt ist.

2. Ausweiskarte nach Anspruch 1, dadurch **gekennzeichnet,** daß der Teil der Aussparung eine Beschichtung mit einer Farbgebung aufweist, die an die Farbe des die Aussparung umgebenden opaken Materials angepaßt ist.

3. Ausweiskarte nach den Ansprüchen 1 - 2, dadurch **gekennzeichnet,** daß die Beschichtung eine Druckschicht ist, die an die Farbe des die Aussparung umgebenden opaken Materials angepaßt ist.

4. Ausweiskarte nach den Ansprüchen 1 - 2, dadurch **gekennzeichnet,** daß die Beschichtung ein Kleber ist, der das elektronische Modul in der Aussparung mit dem Kartenkörper verbindet.

5. Ausweiskarte nach den Ansprüchen 1 - 2, dadurch **gekennzeichnet,** daß der Teil der Aussparung, der an die transparente rückseitige Schicht heran- oder in diese hineinragt, mit Material aus der opaken Kernschicht beschichtet ist.

6. Ausweiskarte nach Anspruch 1, dadurch **gekennzeichnet,** daß die gesamte Aussparung eine Beschichtung mit einer Farbgebung aufweist, die an die Farbe des die Aussparung umgebenden opaken Materials angepaßt ist.

7. Ausweiskarte mit einer opaken Kernschicht, mit wenigstens einer transparenten Deckschicht und mit einer Aussparung zur Aufnahme eines elektronischen Moduls mit integriertem Schaltkreis, wobei die Aussparung bis an die transparente Schicht heran- oder in diese hineinragt, dadurch **gekennzeichnet,** daß zumindest der Teil der Aussparung, der an die transparente rückseitige Schicht heran- oder in diese hineinragt, sich von der Farbe des die Aussparung umgebenden opaken Materials abhebt und als zusätzliches Echtheitsmerkmal der Karte dient.

8. Ausweiskarte nach Anspruch 7, dadurch **gekennzeichnet,** daß zumindest der Teil der Aussparung, der an die transparente rückseitige Schicht heran- oder in diese hineinragt, eine Schicht mit visuell sichtbaren Informationen aufweist.

9. Ausweiskarte nach Anspruch 7, dadurch **gekennzeichnet,** daß die visuell sichtbaren Informationen auf eine metallische Schicht aufgebracht sind.

10. Ausweiskarte nach Anspruch 9, dadurch **gekennzeichnet,** daß die visuell sichtbaren Informationen in die metallische Schicht eingeprägt sind.

11. Ausweiskarte nach Anspruch 10, dadurch **gekennzeichnet,** daß in die metallische Schicht eine holographische Struktur eingeprägt ist.

12. Ausweiskarte mit einer opaken Kernschicht, mit wenigstens einer transparenten Deckschicht und mit einer Aussparung zur Aufnahme eines elektronischen Moduls mit integriertem Schaltkreis, wobei die Aussparung bis an die transparente Deckschicht heran- oder in diese hineinragt, dadurch **gekennzeichnet,** daß die transparente Deckschicht aus zwei einzelnen transparenten Schichten zusammengesetzt ist und der Bodenbereich der Aussparung in der transparenten Schicht liegt, die an die opake Kernschicht angrenzt, und sich zwischen den transparenten Schichten eine zusätzliche Schicht befindet, die den in die transparente Schicht ragenden Bereich der Aussparung zumindest teilweise abdeckt.

13. Ausweiskarte nach Anspruch 12, dadurch **gekennzeichnet,** daß der in die transparente Schicht ragende Bereich der Aussparung komplett durch die zusätzliche Schicht abgedeckt ist.

14. Ausweiskarte nach Anspruch 12, dadurch **gekennzeichnet,** daß die Kartenoberfläche in der transparenten Deckschicht ein Element, wie beispielsweise einen Unterschriftsstreifen, enthält, das den in die transparente Schicht ragenden Bereich der Aussparung teilweise verdeckt und daß der übrige Teil durch die zusätzliche Schicht verdeckt ist.

15. Verfahren zur Herstellung von Ausweiskarten mit einer opaken Kernschicht, mit wenigstens einer transparenten Deckschicht und mit einer Aussparung zur Aufnahme eines elektronischen Moduls mit integriertem Schaltkreis, wobei die Aussparung bis an die transparente rückseitige Schicht heran- oder in diese hineinragt, dadurch **gekennzeichnet,** daß
- ein Kartenkörper mit einer Aussparung bereitgestellt wird;
- zumindest der Teil der Aussparung, der an die transparente rückseitige Schicht heran- oder in diese hineinragt, an die Farbe des die Aussparung umgebenden opaken Materials angepaßt wird.

16. Verfahren zur Herstellung von Ausweiskarten nach Anspruch 15, dadurch **gekennzeichnet,** daß in die Aussparung ein Gießharz eingebracht wird, dessen Farbe an die Farbe des die Aussparung umgebenden opaken Materials angepaßt ist und das so dosiert wird, daß der integrierte Schaltkreis des elektronischen Moduls von dem Gießharz umhüllt wird.

17. Verfahren zur Herstellung von Ausweiskarten nach Anspruch 15, dadurch **gekennzeichnet,** daß in die Aussparung ein Flüssig- oder Heißsiegelkleber eingebracht wird, dessen Farbe an die Farbe des die Aussparung umgebenden opaken Materials angepaßt ist und daß das in die Aussparung eingesetzte elektronische Modul über den Flüssigkleber mit dem Kartenkleber verbunden wird.

18. Verfahren zur Herstellung von Ausweiskarten mit einer opaken Kernschicht, mit wenigstens einer transparenten Deckschicht und mit einer Aussparung zur Aufnahme eines elektronischen Moduls mit integriertem Schaltkreis, wobei die Aussparung bis an die transparente rückseitige Schicht heran- oder in diese hineinragt, dadurch **gekennzeichnet,** daß
- die einzelnen Schichten bereitgestellt werden, wobei die rückseitige transparente Deckschicht bereits eine Aussparung enthält, die weitestgehend dem Teil der Aussparung im Kartenkörper entspricht, der bei dem fertiggestellten Kartenkörper in dieser Schicht liegt;
- Laminieren der bereitgestellten Schichten, so daß die Kartenschichten erweichen und das Material der opaken Kernschicht in die Aussparung der rückseitigen transparenten Deckschicht fließt;
- Erstellen der Aussparung im Kartenkörper derart, daß der Teil der Aussparung, der in die rückseitige transparente Deckschicht hineinragt, von einer Schicht aus opaken Material bedeckt ist.

19. Verfahren zur Herstellung von Ausweiskarten nach Anspruch 18, dadurch **gekennzeichnet,** daß die Aussparung im Kartenkörper durch Fräsen erzeugt wird.
